# EUROPEAN PATENT APPLICATION

(11) **EP 4 661 459 A1**
(43) Date of publication of application: **10.12.2025**
(21) Application number: 24749636.7
(22) Date of filing: 26.01.2024
(51) Int. Cl.: H04W 12/04

(54) **METHOD FOR UPDATING SECONDARY KEY, TERMINAL, AND NETWORK-SIDE DEVICE**

(30) Priority: 02.02.2023 CN 202310080154
(71) Applicant: Vivo Mobile Communication Co., Ltd., Dongguan, Guangdong 523863 (CN)
(72) Inventor: LIANG, Jing, Dongguan, Guangdong 523863 (CN); BAO, Wei, Dongguan, Guangdong 523863 (CN)
(74) Representative: Murgitroyd & Company
(86) International application number: PCT/CN2024/074300
(87) International publication number: WO 2024/160155

(57) **Abstract**

Embodiments of this application disclose a secondary key updating method, a terminal, and a network side device, and belong to the field of communication technologies. The method includes: determining, by a terminal based on first information in a case of performing a CPC, whether to update a secondary key, where the first information includes at least one of the following: 1) a first serial number and/or a second serial number; 2) indication information from a network side device, the indication information being used for indicating whether to update the secondary key; and 3) a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs.

## Description

This application claims priority to Chinese Patent Application No. 202310080154.5, filed with the China National Intellectual Property Administration on February 2, 2023 and entitled "SECONDARY KEY UPDATING METHOD, TERMINAL, AND NETWORK SIDE DEVICE", which is incorporated herein by reference in its entirety.

### TECHNICAL FIELD

This application belongs to the field of communication technologies, and specifically, to a secondary key updating method, a terminal, and a network side device.

### BACKGROUND

In a related technology, a terminal does not need to care about a network side structure. For example, when a primary secondary cell change (Primary Secondary Cell change, PSCell change) occurs, the terminal does not need to know whether an intra-SN (intra-SN) primary secondary cell change or an inter-SN (inter-SN) primary secondary cell change occurs. The terminal only needs to follow configurations of a network side device. If the network side device provides a secondary node key counter (sk-counter) or another indication information indicating that the terminal needs to update a secondary key, the terminal performs a key updating process. If the network side device does not provide related information, the terminal does not perform the key updating process.

In a conditional PSCell change (conditional PSCell change, CPC), the terminal needs to determine, based on evaluation of the terminal, whether a condition of the primary secondary cell change is satisfied and perform a related process. In this case, if the terminal does not know how to accurately determine whether the secondary key needs to be updated, communications are easily affected due to inconsistent understandings of the terminal and the network side device on the secondary key.

### SUMMARY

Embodiments of this application provide a secondary key updating method, a terminal, and a network side device, which can solve a problem that communications are easily affected because the terminal cannot determine whether a secondary key needs to be updated.

According to a first aspect, a secondary key updating method is provided, including: determining, by a terminal based on first information in a case of performing a CPC, whether to update a secondary key, where the first information includes at least one of the following: a first serial number and/or a second serial number; indication information from a network side device, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs.

According to a second aspect, a secondary key updating method is provided, including: transmitting, by a network side device, first information, the first information being used for indicating whether a secondary key needs to be updated in a case of performing a CPC, where the first information includes at least one of the following: a first serial number and/or a second serial number; indication information, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving a terminal belongs, and the second serial number is a serial number of an SN to which a PSCell that the terminal is about to access belongs.

According to a second aspect, a secondary key updating method is provided, including: determining, by a target SN, whether a terminal updates a secondary key, where the target SN includes an SN to which a PSCell that the terminal is about to access during performing a CPC belongs; and if the target SN determines that the secondary key has been updated, communicating, by the target SN, with the terminal by using an updated secondary key or a first key corresponding to the updated secondary key.

According to a fourth aspect, a terminal is provided, including: a processing module, configured to determine, based on first information in a case of performing a CPC, whether to update a secondary key, where the first information includes at least one of the following: a first serial number and/or a second serial number; indication information from a network side device, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs.

According to a fifth aspect, a network side device is provided, including: a transmitting module, configured to transmit first information, the first information being used for indicating whether a secondary key needs to be updated in a case of performing a CPC, where the first information includes at least one of the following: a first serial number and/or a second serial number; indication information, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving a terminal belongs, and the second serial number is a serial number of an SN to which a PSCell that the terminal is about to access belongs.

According to a fifth aspect, a network side device is provided, including: a determining module, configured to determine whether a terminal updates a secondary key, where the network side device includes an SN to which a PSCell that the terminal is about to access during performing a CPC belongs; and a communication module, configured to: if it is determined that the secondary key has been updated, communicate with the terminal by using an updated secondary key or a first key corresponding to the updated secondary key.

According to a seventh aspect, a terminal is provided. The terminal includes a processor and a memory. The memory has a program or an instruction executable on the processor stored therein, and when the program or the instruction is executed by the processor, the steps of the method as described in the first aspect are implemented.

According to an eighth aspect, a terminal is provided, including: a processor and a communication interface, where the processor is configured to determine, based on first information in a case of performing a CPC, whether to update a secondary key, where the first information includes at least one of the following: a first serial number and/or a second serial number; indication information from a network side device, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs.

According to a ninth aspect, a network side device is provided. The network side device includes a processor and a memory. The memory has a program or an instruction executable on the processor stored therein, and when the program or the instruction is executed by the processor, the steps of the method as described in the second aspect or the third aspect are implemented.

According to a tenth aspect, a network side device is provided, including a processor and a communication interface. The communication interface is configured to transmit first information, the first information being used for indicating whether a secondary key needs to be updated in a case of performing a CPC, where the first information includes at least one of the following: a first serial number and/or a second serial number; indication information, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving a terminal belongs, and the second serial number is a serial number of an SN to which a PSCell that the terminal is about to access belongs; or, the processor is configured to determine whether a terminal updates a secondary key. The network side device includes an SN to which a PSCell that the terminal is about to access during performing a CPC belongs; and the communication module is configured to: if it is determined that the secondary key has been updated, communicate with the terminal by using an updated secondary key or a first key corresponding to the updated secondary key.

According to an eleventh aspect, a secondary key updating system, including a terminal, a first network side device, and/or a second network side device. The terminal may be configured to perform the steps of the method as described in the first aspect. The first network side device may be configured to perform the steps of the method as described in the second aspect or the third aspect. The second network side device may be configured to perform the steps of the method as described in the third aspect.

According to a twelfth aspect, a readable storage medium is provided. The readable storage medium stores a program or an instruction. When the program or the instruction is executed by a processor, the steps of the method as described in the first aspect are implemented, or the steps of the method as described in the second aspect are implemented, or the steps of the method as described in the third aspect are implemented.

According to a thirteenth aspect, a chip is provided. The chip includes a processor and a communication interface. The communication interface is coupled to the processor; and the processor is configured to execute a program or an instruction to implement the steps of the method as described in the first aspect, or the steps of the method as described in the second aspect, or the steps of the method as described in the third aspect.

According to a fourteenth aspect, a computer program/program product is provided. The computer program/program product is stored in a storage medium. The computer program/program product is executed by at least one processor to implement the steps of the method as described in the first aspect, or the steps of the method as described in the second aspect, or the steps of the method as described in the third aspect.

In the embodiments of this application, in a case of performing the CPC, the terminal may determine, based on the first information, whether to update the secondary key, so that understandings of whether to update the secondary key of the terminal and the network side device are consistent. This helps the terminal and the network side device to perform a secure communication process by using a correct secondary key, thereby improving communication performance.

### BRIEF DESCRIPTION OF THE DRAWINGS

FIG. 1 is a schematic diagram of a wireless communication system according to an embodiment of this application;
FIG. 2 is a schematic flowchart of a secondary key updating method according to an embodiment of this application;
FIG. 3 is a schematic flowchart of a secondary key updating method according to an embodiment of this application;
FIG. 4 is a schematic flowchart of a secondary key updating method according to an embodiment of this application;
FIG. 5 is a schematic structural diagram of a terminal according to an embodiment of this application;
FIG. 6 is a schematic structural diagram of a network side device according to an embodiment of this application;
FIG. 7 is a schematic structural diagram of a network side device according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. Based on the embodiments of this application, all other embodiments obtained by a person of ordinary skill in the art fall within the protection scope of this application.

This specification and claims of this application, and terms "first" and "second" are used to distinguish similar objects, but are unnecessarily used to describe a specific sequence or order. It should be understood that terms used like this are interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" in this specification and the claims indicates at least one of connected objects, and a character "/" generally indicates an "or" relationship between associated objects.

It is worth noting that the technology described in the embodiments of this application is not limited to a long term evolution (Long Term Evolution, LTE)/LTE Evolution (LTE-Advanced, LTE-A) system, and can alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually interchangeably used, and the technologies described may be applied to the systems and radio technologies mentioned above, and may alternatively be applied to other systems and radio technologies. The following describes a new radio (New Radio, NR) system for the example purpose and uses the term NR in most of the following descriptions. However, these technologies can alternatively be applied to applications except the NR system application, such as a 6th generation (6th Generation, 6G) communication system.

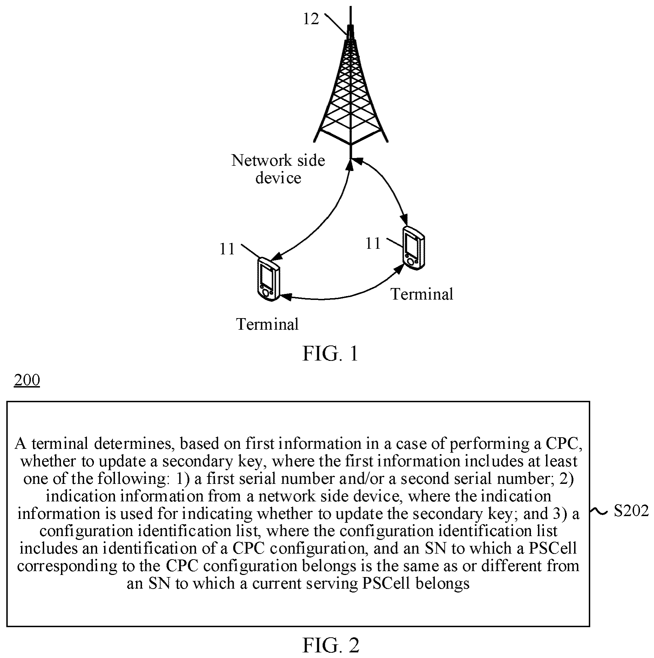

FIG. 1 is a block diagram of a wireless communication system applicable to an embodiment of this application. The wireless communication system includes a terminal 11 and a network side device 12. The terminal 11 may be a mobile phone, a tablet personal computer (Tablet Personal Computer), a laptop computer (Laptop Computer) or alternatively referred to as a laptop, a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart band, smart headphones, smart glasses, smart jewelry (a smart bangle, a smart bracelet, a smart ring, a smart necklace, a smart anklet, a smart ankle chain, and the like), a smart wristband, smart clothing, and the like. It should be noted that a specific type of the terminal 11 is not limited in the embodiments of this application. The network side device 12 may include an access network device or a core network device. The access network device may alternatively be referred to as a radio access network device, a radio access network (Radio Access Network, RAN), a radio access network function, or a radio access network unit. The radio access network device may include a base station, a WLAN access point, a WiFi node, or the like. The base station may be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted that, in the embodiments of this application, only a base station in an NR system is used as an example for description, and a specific type of the base station is not limited.

A secondary key updating method provided by an embodiment of this application will be described below through some embodiments and their application scenarios with reference to the accompanying drawings.

As shown in FIG. 2, an embodiment of this application provides a secondary key updating method 200. The method may be performed by a terminal. In other words, the method may be performed by software or hardware installed in the terminal. The method includes the following steps.

S202: The terminal determines, based on first information in a case of performing a CPC, whether to update a secondary key, where the first information includes at least one of the following: 1) a first serial number and/or a second serial number; 2) indication information from a network side device, the indication information being used for indicating whether to update the secondary key; and 3) a configuration identification list, the configuration identification list including an identification of a CPC configuration, and a secondary node (Secondary node, SN) to which a primary secondary cell (Primary Secondary Cell, PSCell) corresponding to the CPC configuration belongs is the same as or different from an SN to which a current serving PSCell belongs.

The first serial number is a serial number of an SN to which a PSCell currently serving the terminal belongs, and the second serial number is a serial number of an SN to which a PSCell that the terminal is about to access belongs.

The secondary key mentioned in this embodiment of this application may be used for encrypting a bearer, so that security can be ensured when communication is performed on a ratio through the bearer.

In an example, the first information includes the first serial number and the second serial number. In a case that the terminal performs the CPC, if it is determined that the first serial number is the same as the second serial number, it is determined that the CPC is intra-SN handover, that is, the SN does not change and it is determined not to update the secondary key; and if it is determined that the first serial number is different from the second serial number, it is determined that the CPC is inter-SN handover, that is, the SN changes and it is determined to update the secondary key.

In an example, the first serial number may be a serial number associated with an SN to which a PSCell currently serving the terminal belongs, and the second serial number may be a serial number associated with an SN to which a PSCell that the terminal is about to access belongs.

In an example, the foregoing first information may be an identity (ID). For example, the first serial number may be an ID corresponding to an SN to which a PSCell currently serving the terminal belongs, and the second serial number may be an ID corresponding to an SN to which a PSCell that the terminal is about to access belongs.

In an example, the first information includes the first serial number or the second serial number. In a case that the terminal performs the CPC, if only the first serial number or the second serial number is obtained, it is determined that the CPC is inter-SN handover, that is, the SN changes and it is determined to update the secondary key.

In an example, the first information includes the indication information from the network side device. The indication information may be used for directly indicating whether the terminal updates the secondary key, or the indication information is used for indicating whether a target SN is the same as the SN to which the PSCells currently serving the terminal belongs, or the like. The target SN includes the SN to which the PSCell that the terminal is about to access during performing the CPC belongs. In this way, if it is determined, based on the indication information, that the target SN is the same as the SN to which the PSCell currently serving the terminal belongs, the terminal determines that the CPC is intra-SN handover and determines not to update the secondary key. If it is determined that the target SN is different from the SN to which the PSCell currently serving the terminal belongs, the terminal determines that the CPC is inter-SN handover and determines to update the secondary key.

In an example, the first information includes a configuration identification list. In a case that the terminal performs the CPC, the terminal determines, based on the configuration identification list, whether an SN to which a PSCell that is about to be accessed belongs is the same as the SN to which the current serving PSCell belongs, and then determines whether to update the secondary key.

In the embodiments of this application, after S202, the method may further include at least one of the following steps:
1) The terminal ignores a first parameter in the CPC configuration in a case that the terminal determines, based on the first information, not to update the secondary key, the first parameter being used for updating the secondary key, for example, the first parameter being an sk-counter in the CPC configuration.
2) The terminal derives or updates the secondary key by using the first parameter in the CPC configuration in a case that the terminal determines, based on the first information, to update the secondary key. For example, the first parameter is an sk-counter in the CPC configuration, and the terminal derives or updates the secondary key by using the sk-counter in the CPC configuration.

In the secondary key updating method provided by this embodiment of this application, in a case of performing the CPC, the terminal may determine, based on the first information, whether to update the secondary key, so that understandings of whether to update the secondary key of the terminal and the network side device are consistent. This helps the terminal and the network side device to perform a secure communication process by using a correct secondary key, thereby improving communication performance.

How to determine, by the terminal based on the first information in a case of performing the CPC, whether to update the secondary key is roughly described above. Detailed descriptions are provided below in a plurality of solutions.

### Solution I

In this solution, the network side device includes a serial number of an SN in a secondary cell group (Secondary Cell Group, SCG) configuration in a CPC configuration. Additionally, the serial number may alternatively be specifically a serial number of an SN distributed unit (DU) and/or a serial number of an SN centralized unit (CU). During the performing of the CPC, the terminal determines, based on a serial number of an SN to which a current PSCell belongs and a serial number of an SN to which a PSCell that is about to be accessed belongs, whether the CPC is intra-SN handover or inter-SN handover. In a case that it is determined that the CPC is intra-SN handover, the terminal does not update the secondary key. In a case that it is determined that the CPC is inter-SN handover, the terminal updates the secondary key.

The PSCell that is about to be accessed in this embodiment of this application may be a PSCell corresponding to an SCG configuration in a radio resource control (Radio Resource Control, RRC) reconfiguration in the CPC configuration applied when the terminal performs the CPC.

In an embodiment, the first information includes the first serial number and the second serial number, and that the terminal determines, based on first information in a case of performing a CPC, whether to update a secondary key includes: the terminal determines, based on the first serial number and the second serial number in a case of performing the CPC, whether the CPC is intra-SN handover or inter-SN handover, where if the first serial number and the second serial number are the same, it is determined that the CPC is the intra-SN handover, and if the first serial number and the second serial number are different, it is determined that the CPC is the inter-SN handover; the terminal determines, in a case that the CPC is intra-SN handover, not to update the secondary key; and the terminal determines, in a case that the CPC is inter-SN handover, to update the secondary key.

In this embodiment, before the terminal determines, based on first information in a case of performing a CPC, whether to update a secondary key, the method further includes the following steps: the terminal receives the CPC configuration, where an SCG configuration in the CPC configuration includes a serial number of an SN.

In this embodiment, before the terminal determines, based on first information in a case of performing a CPC, whether to update a secondary key, the method further includes: the terminal obtains the first serial number based on a serving cell configuration; or, the terminal obtains the first serial number based on a configuration other than a serving cell configuration.

In this embodiment, the first serial number may be carried in the serving cell configuration of a network side, or the terminal stores the first serial number based on information carried in another configuration on the network side. For example, before the terminal switches to a current cell, the network side configures the first serial number to the terminal in a previous cell. For example, in the previous cell, a received conditional configuration includes the first serial number, and then the terminal saves the first serial number.

In an embodiment, the first information includes the first serial number or the second serial number, and that the terminal determines, based on first information in a case of performing a CPC, whether to update a secondary key includes: in a case that the terminal performs the CPC, if only the first serial number or the second serial number is obtained, the terminal determines that the CPC is inter-SN handover, and the terminal determines to update the secondary key.

In solution I, if the terminal determines that the CPC is intra-SN handover, the terminal ignores an sk-counter (if any) in the CPC configuration. If the terminal determines that the CPC is inter-SN handover, the secondary key is derived or updated by using the sk-counter in the CPC configuration.

In solution I, by carrying an SN serial number in the CPC configuration, during the performing of the CPC, the terminal may know whether the CPC is intra-SN handover or inter-SN handover, to further determine whether to update a key.

### Solution II

In this solution, when the network side device transmits the CPC configuration to the terminal, additional indication information may be carried. The indication information is used for indicating whether to update the secondary key.

In an embodiment, before S202, the method further includes the following steps: The terminal receives the CPC configuration, the CPC configuration including the indication information, or the CPC configuration being associated with the indication information, where the indication information is used for indicating at least one of the following:
1) in a case that the current serving PSCell applies the CPC configuration and the CPC is performed, whether the terminal needs to update the secondary key;
2) whether the SN to which the PSCell in the CPC configuration belongs is the same as the SN to which the current serving PSCell belongs, where an SN to which a PSCell belongs may be an SN to which the PSCell or an SGC belongs;
   it can be understood that in a case that the SN to which the PSCell in the CPC configuration belongs is the same as the SN to which the current serving PSCell belongs, the terminal determines not to update the secondary key; in a case that the SN to which the PSCell in the CPC configuration belongs is different from the SN to which the current serving PSCell belongs, the terminal determines to update the secondary key; and
3) whether a packet data convergence protocol (Packet Data Convergence Protocol, PDCP) anchor point of the PSCell in the CPC configuration changes relative to the current serving PSCell.

It can be understood that in a case that the PDCP anchor point does not change, the terminal determines not to update the secondary key; and in a case that the PDCP anchor point changes, the terminal determines to update the secondary key.

In this embodiment, the CPC configuration received by the terminal may be a CPC configuration associated with a target SN. The target SN includes an SN to which a PSCell that the terminal is about to access during perform the CPC belongs.

In solution II, the network side device may directly indicate whether a PSCell corresponding to a CPC configuration and the PSCell currently serving the terminal are intra-SNs or inter-SNs, so that when performing the CPC, the terminal determines, based on conditions of PSCells corresponding to different CPC configurations, whether the CPC is intra-SN handover or inter-SN handover, to further determine whether to update a key.

Optionally, the network side device may alternatively update the indication information at any time. In an embodiment, the method further includes: the terminal receives second information, the second information being used for updating the indication information.

### Solution III

In this solution, the network side device transmits one or more configuration identification lists (configuration ID list) to the terminal, and indicates an attribute of each configuration identification list in one of the following manners:
1) The network side device transmits a first list, an SN to which a PSCell corresponding to an identification of a CPC configuration included in the first list belongs being the same as the SN to which the current serving PSCell belongs.
   For example, the network side device transmits the first list. By default, the CPC configuration corresponding to the identification of the CPC configuration in the first list is a configuration of an intra-SN (optionally, additional indication information may alternatively be carried. When the terminal receives the first list and the additional indication information, it indicates that the CPC configuration corresponding to the identification of the CPC configuration in the first list is the configuration of the intra-SN). When the terminal performs the CPC on the current serving PSCell, if the PSCell that is about to be accessed is a PSCell corresponding to the identification of the CPC configuration in the first list (specifically, it may be a PSCell included in the CPC configuration corresponding to the identification of the CPC configuration. Subsequent cases are similar), the terminal ignores an sk-counter (if any) in the performed CPC configuration.
2) The network side device transmits a second list, an SN to which a PSCell corresponding to an identification of a CPC configuration included in the second list belongs being different from the SN to which the current serving PSCell belongs.
   For example, the network side device transmits the second list. By default, a CPC configuration corresponding to the identification of the CPC configuration in the second list is a configuration of an inter-SN (optionally, additional indication information may alternatively be carried. When the terminal receives the second list and the additional indication information, it indicates that the CPC configuration corresponding to the identification of the CPC configuration in the second list is the configuration of the inter-SN). When the terminal performs the CPC on the current serving PSCell, if the PSCell that is about to be accessed is a PSCell corresponding to the identification of the CPC configuration in the second list, the terminal derives or updates the secondary key by using an sk-counter in the CPC configuration.
3) The network side device transmits a third list and a fourth list, an SN to which a PSCell corresponding to an identification of a CPC configuration included in the third list belongs being the same as the SN to which the current serving PSCell belongs, and an SN to which a PSCell corresponding to an identification of a CPC configuration included in the fourth list belongs being different from the SN to which the current serving PSCell belongs.

For example, the network side device transmits two configuration identification lists, namely, the third list and the fourth list. The network side device may respectively indicate, in the two configuration identification lists, that a CPC configuration corresponding to the identification of the CPC configuration in a particular configuration identification list is a configuration of an inter-SN, and a CPC configuration corresponding to the identification of the CPC configuration in a particular configuration identification list is a configuration of an intra-SN. Alternatively, by default, the CPC configuration corresponding to the third list is the configuration of the intra-SN, and the CPC configuration corresponding to the fourth list is the configuration of the inter-SN. Or, in another example, it may be by default that the CPC configuration corresponding to the third list is the configuration of the inter-SN, and the CPC configuration corresponding to the fourth list is the configuration of the intra-SN.

In an embodiment, the first information includes the configuration identification list, and that the terminal determines, based on first information in a case of performing a CPC, whether to update a secondary key includes: in a case of performing the CPC, the terminal determines, based on the configuration identification list, whether an SN to which a PSCell that is about to be accessed belongs is the same as the SN to which the current serving PSCell belongs; in a case that the SN to which the PSCell that is about to be accessed belongs is the same as the SN to which the current serving PSCell belongs, the terminal determines not to update the secondary key; and in a case that the SN to which the PSCell that is about to be accessed belongs is different from the SN to which the current serving PSCell belongs, the terminal determines to update the secondary key.

In solution III, the network side device notifies, based on the configuration identification list, the terminal of which condition configuration is a CPC configuration of the intra-SN and which condition configuration is a CPC configuration of the inter-SN, and the terminal further determines, based on the configuration identification list, whether to update the key.

To describe the secondary key updating method provided in this embodiment of this application in detail, the following describes the method with reference to several specific embodiments.

### Embodiment I

Embodiment I corresponds to solution I above, and includes the following two cases:
**In** case I, the method includes the following steps:
Step 1: A network side transmits two CPC configurations to a user equipment (User Equipment, UE). The two CPC configurations respectively correspond to PSCell#1a and PSCell#2a, and indicate that a serial number of an SN corresponding to PSCell#1a is 1 and a serial number of an SN corresponding to PSCell#2a is 2. The two CPC configurations both include sk-counters.

A PSCell on which the UE currently works is #2b, and a serial number of an SN corresponding to PSCells#2b is 2.

Step 2: The UE evaluates the CPC configurations, finds that PSCell#2a satisfies an evaluation condition, and starts to perform a CPC. Since the serial number of the SN corresponding to PSCell#2a is the same as the serial number of the SN corresponding to PSCell#2b on which the UE currently works, the UE ignores the sk-counters in the CPC configurations, and does not update a secondary key.

Step 3: The UE completes a CPC execution process, and successfully accesses target cell PSCell#2a.

In case II, the method includes the following steps:
Step 1: A network side transmits two CPC configurations to a user equipment (UE). The two CPC configurations respectively correspond to PSCell#1a and PSCell#2a, and indicate that a serial number of an SN corresponding to PSCell#1a is 1 and a serial number of an SN corresponding to PSCell#2a is 2. The two CPC configurations both include sk-counters.

A PSCell on which the UE currently works is #2b, and a serial number of an SN corresponding to PSCells#2b is 2.

Step 2: The UE evaluates the CPC configurations, finds that PSCell#1a satisfies an evaluation condition, and starts to perform a CPC. Since the serial number of the SN corresponding to PSCell#1a is different from the serial number of the SN corresponding to PSCell#2b on which the UE currently works, the UE uses the sk-counters in the CPC configurations to derive or update a secondary key.

sStep 3: The UE completes a CPC execution process, and successfully accesses target cell PSCell#1a.

### Embodiment II

Embodiment II corresponds to solution II above, and includes the following two cases:
In case I, the method includes the following steps:
Step 1: A PSCell on which a UE currently works is #2b. A network side transmits two CPC configurations to the UE. The two CPC configurations respectively correspond to PSCell#1a and PSCell#2a, and indicate that PSCell#1a and PSCell#2b are in an inter-SN relationship and PSCell#2a and PSCell#2b are in an intra-SN relationship. The two CPC configurations both include sk-counters.
Step 2: The UE evaluates the CPC configurations, finds that PSCell#2a satisfies an evaluation condition, and starts to perform a CPC. Since PSCell#2a and PSCell#2b on which the UE currently works are in the intra-SN relationship, the UE ignores the sk-counters in the CPC configurations, and does not update a secondary key.
Step 3: The UE completes a CPC execution process, and successfully accesses target cell PSCell#2a.

In case II, the method includes the following steps:
Step 1: A PSCell on which a UE currently works is #2b. A network side transmits two CPC configurations to the UE. The two CPC configurations respectively correspond to PSCells#1a and PSCell#2a, and indicate that when switching from an SN to which PSCell#2b belongs to an SN to which PSCell#1a belongs is performed, a carried PDCP anchor point may change, and when switching from the SN to which PSCell#2b belongs to an SN to which PSCell#2a belongs is performed, the carried PDCP anchor point may not change. The two CPC configurations both include sk-counters.
Step 2: The UE evaluates the CPC configurations, finds that PSCell#2a satisfies an evaluation condition, and starts to perform a CPC. Since PSCell#2a and PSCell#2b on which the UE currently works are intra-SNs, the UE ignores the sk-counters in the CPC configurations, and does not update a secondary key.
Step 3: The UE completes a CPC execution process, and successfully accesses target cell PSCell#2a.

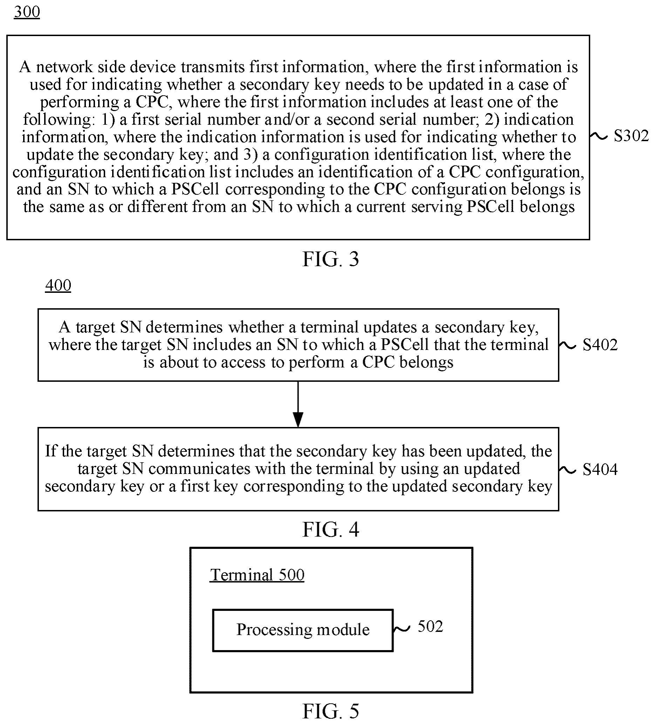

The secondary key updating method of this embodiment of this application is described in detail above with reference to FIG. 2. A secondary key updating method of another embodiment of this application is described in detail below with reference to FIG. 3. It may be understood that interaction between a network side device and a terminal described on the network side device is the same as or corresponds to that described on the terminal side in the method shown in FIG. 2. To avoid repetition, relevant descriptions are properly omitted.

FIG. 3 is a schematic flowchart of a secondary key updating method according to an embodiment of this application. The method may be applied to a network side device. As shown in FIG. 3, the method 300 includes the following steps.

S302: The network side device transmits first information, the first information being used for indicating whether a secondary key needs to be updated in a case of performing a CPC, where the first information includes at least one of the following: 1) a first serial number and/or a second serial number; 2) indication information, the indication information being used for indicating whether to update the secondary key; and 3) a configuration identification list, the configuration identification list including an identification of a CPC configuration, and an SN to which a PSCell corresponding to the CPC configuration belongs is the same as or different from an SN to which a current serving PSCell belongs.

The first serial number is a serial number of an SN to which a PSCell currently serving a terminal belongs, and the second serial number is a serial number of an SN to which a PSCell that the terminal is about to access belongs.

In the secondary key updating method provided by this embodiment of this application, the network side device transmits the first information, the first information being used for indicating whether the secondary key needs to be updated in a case of performing the CPC. In this way, in a case of performing the CPC, the terminal may determine, based on the first information, whether to update the secondary key, so that understandings of whether to update the secondary key of the terminal and the network side device are consistent. This helps the terminal and the network side device to perform a secure communication process by using a correct secondary key, thereby improving communication performance.

Optionally, in an embodiment, the method further includes: the network side device transmits the CPC configuration, the CPC configuration including the indication information, or the CPC configuration being associated with the indication information, where the indication information is used for indicating at least one of the following:
1) in a case that the PSCell currently serving the terminal applies the CPC configuration and the CPC is performed, whether the secondary key needs to be updated;
2) whether the SN to which the PSCell in the CPC configuration belongs is the same as the SN to which the PSCell currently serving the terminal belongs; and
3) whether a PDCP anchor point of the PSCell in the CPC configuration changes relative to the current serving PSCell.

Optionally, in an embodiment, the configuration identification list includes one of the following:
1) a first list, an SN to which a PSCell corresponding to an identification of a CPC configuration included in the first list belongs being the same as the SN to which the current serving PSCell belongs;
2) a second list, an SN to which a PSCell corresponding to an identification of a CPC configuration included in the second list belongs being different from the SN to which the current serving PSCell belongs; and
3) a third list and a fourth list, an SN to which a PSCell corresponding to an identification of a CPC configuration included in the third list belongs being the same as the SN to which the current serving PSCell belongs, and an SN to which a PSCell corresponding to an identification of a CPC configuration included in the fourth list belongs being different from the SN to which the current serving PSCell belongs.

FIG. 4 is a schematic flowchart of a secondary key updating method according to an embodiment of this application. The method may be applied to a network side device. As shown in FIG. 4, the method 400 includes the following steps.

S402: A target SN determines whether a terminal updates a secondary key, the target SN including an SN to which a PSCell that the terminal is about to access during performing a CPC belongs.

S404: If the target SN determines that the secondary key (on a terminal side) has been updated, the target SN communicates with the terminal by using an updated secondary key or a first key (or referred to as a new key) corresponding to the secondary key updated by the terminal.

Optionally, in another embodiment, if S402 is executed and the target SN determines that the secondary key (on the terminal side) is not updated, the target SN communicates with the terminal by using a previous secondary key.

Optionally, the target SN receives an SN reconfiguration complete (SN Reconfiguration Complete) message or an SN status transfer message (SN Status Transfer message) that is transmitted by a master node (Master node, MN), and the target SN learns that a carried PDCP anchor point changes. Then, the target SN may know that the terminal updates a carried key through an sk-counter. The target SN may alternatively perform secure communication with the terminal by using an updated key or by a first key corresponding to the secondary key updated by the terminal.

In the secondary key updating method provided in this embodiment of this application, if the target SN determines that the secondary key (on the terminal side) has been updated, the target SN communicates with the terminal by using the updated secondary key or the first key corresponding to the secondary key updated by the terminal, so that understandings of whether to update the secondary key of the terminal and the network side device are consistent. This helps the terminal and the network side device to perform a secure communication process by using a correct secondary key, thereby improving communication performance.

Optionally, in an embodiment, that a target SN determines whether a terminal updates a secondary key includes: the target SN determines, based on third information, whether the terminal updates the secondary key, where the third information is carried by at least one of the following: an SN reconfiguration complete (SN Reconfiguration Complete) message and an SN status transfer message (SN Status Transfer message).

In this embodiment, the target SN may determine, based on the received SN reconfiguration complete message or SN status transfer message, whether the terminal side updates a key, and then communicate with the terminal side by using the same key or a corresponding key.

To describe the secondary key updating method provided in this embodiment of this application in detail, the following describes the method with reference to two specific embodiments.

### Embodiment III

This embodiment includes the following steps:
Step 1: A PSCell on which a UE currently works is #2b. A network side transmits a CPC configuration to the UE, where PSCells#1a corresponds to X sk-counters that are used for accessing PSCells#1a for a plurality of times.
Step 2: The UE performs CPC evaluation, finds that PSCells#1a satisfies a condition, and performs a CPC, and the UE updates a key by a Yth sk-counter among the X sk-counters. Y is an integer within 1 ≤ Y ≤ X.
Step 3: The UE accesses PSCells#1a.
Step 4: An SN (namely, a source-SN, source-SN) to which PSCells#2b belongs transmits an SN Status Transfer message to an MN, and the MN transmits the SN Status Transfer message to an SN (namely, a target SN, target SN) to which PSCells#1a belongs.
Step 5: After receiving the SN Status Transfer message, the target SN further performs subsequent communication with the UE by using the secondary key corresponding to the Yth sk-counter. The target SN may learn, based on interaction signaling between the target SN and the MN, the secondary key corresponding to the Yth sk-counter used by the terminal.

### Embodiment IV

This embodiment includes the following steps:
Step 1: A PSCell on which a UE currently works is #2b. A network side transmits a CPC configuration to the UE, where PSCells#1a corresponds to X sk-counters that are used for accessing PSCells#1a for a plurality of times.
Step 2: The UE performs CPC evaluation, finds that PSCells#1a satisfies a condition, and performs a CPC, and the UE updates a key by a Yth sk-counter among the X sk-counters. Y is an integer within 1 ≤ Y ≤ X.
Step 3: The UE transmits a first handover complete message (for example, RRC Reconfiguration Complete) to an MN, where a second handover complete message (for example, RRC Reconfiguration Complete) is included. The second handover complete message indicates that the UE updates the secondary key, and/or indicates that the UE updates the key by using the Yth sk-counter among the X sk-counters.
Step 4: The MN transmits an SN Reconfiguration Complete message to a target SN, where a second handover complete message is included.
Step 5: After receiving the SN Reconfiguration Complete, the target SN further performs subsequent communication with the UE by using thee secondary key corresponding to the Yth sk-counter.

FIG. 5 is a schematic structural diagram of a terminal according to an embodiment of this application. As shown in FIG. 5, the terminal 500 includes the following module:
a processing module 502, configured to determine, based on first information in a case of performing a CPC, whether to update a secondary key, where the first information includes at least one of the following: 1) a first serial number and/or a second serial number; 2) indication information from a network side device, the indication information being used for indicating whether to update the secondary key; and 3) a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs.

Optionally, the terminal 500 further includes a transmitting module and a receiving module.

In the terminal provided by this embodiment of this application, in a case of performing the CPC, the terminal may determine, based on the first information, whether to update the secondary key, so that understandings of whether to update the secondary key of the terminal and the network side device are consistent. This helps the terminal and the network side device to perform a secure communication process by using a correct secondary key, thereby improving communication performance.

Optionally, ins an embodiment, the first information includes the first serial number and the second serial number, and the processing module 502 is configured to: determine, based on the first serial number and the second serial number in a case of performing the CPC, whether the CPC is intra-SN handover or inter-SN handover; determine, in a case that the CPC is intra-SN handover, not to update the secondary key; and determine, in a case that the CPC is inter-SN handover, to update the secondary key.

Optionally, in an embodiment, the terminal further includes a receiving module, configured to receive the CPC configuration, where an SCG configuration in the CPC configuration includes a serial number of an SN.

Optionally, in an embodiment, the terminal further includes a receiving module, configured to: obtain the first serial number based on a serving cell configuration; or, obtain the first serial number based on a configuration other than a serving cell configuration.

Optionally, as an embodiment, the first information includes the first serial number or the second serial number, and the processing module 502 is configured to: in a case of performing the CPC, if only the first serial number or the second serial number is obtained, determine that the CPC is inter-SN handover and determine to update the secondary key.

Optionally, in an embodiment, the terminal further includes: a receiving module, configured to receive the CPC configuration, the CPC configuration including the indication information, or the CPC configuration being associated with the indication information, where the indication information is used for indicating at least one of the following: 1) in a case that the current serving PSCell applies the CPC configuration and the CPC is performed, whether the terminal needs to update the secondary key; 2) whether the SN to which the PSCell in the CPC configuration belongs is the same as the SN to which the current serving PSCell belongs; and 3) whether a PDCP anchor point of the PSCell in the CPC configuration changes relative to the current serving PSCell.

Optionally, in an embodiment, the terminal further includes a receiving module, configured to receive second information, the second information being used for updating the indication information.

Optionally, in an embodiment, the first information includes the configuration identification list, and the processing module is configured to: in a case of performing the CPC, determine, based on the configuration identification list, whether an SN to which a PSCell that is about to be accessed belongs is the same as the SN to which the current serving PSCell belongs; in a case that the SN to which the PSCell that is about to be accessed belongs is the same as the SN to which the current serving PSCell belongs, determine not to update the secondary key; and in a case that the SN to which the PSCell that is about to be accessed belongs is different from the SN to which the current serving PSCell belongs, determine to update the secondary key.

Optionally, in an embodiment, the configuration identification list includes one of the following: 1) a first list, an SN to which a PSCell corresponding to an identification of a CPC configuration included in the first list belongs being the same as the SN to which the current serving PSCell belongs; 2) a second list, an SN to which a PSCell corresponding to an identification of a CPC configuration included in the second list belongs being different from the SN to which the current serving PSCell belongs; and 3) a third list and a fourth list, an SN to which a PSCell corresponding to an identification of a CPC configuration included in the third list belongs being the same as the SN to which the current serving PSCell belongs, and an SN to which a PSCell corresponding to an identification of a CPC configuration included in the fourth list belongs being different from the SN to which the current serving PSCell belongs.

Optionally, in an embodiment, the processing module 502 is further configured to perform at least one of the following: 1) ignoring a first parameter in the CPC configuration in a case that it is determined, based on the first information, not to update the secondary key, the first parameter being used for updating the secondary key; and 2) deriving or updating the secondary key by using the first parameter in the CPC configuration in a case that it is determined, based on the first information, to update the secondary key.

The terminal 500 according to this embodiment of this application may be found in the procedures of the method 200 of the embodiments of this application. Moreover, the units/modules in the terminal 500 and the foregoing other operations and/or functions are respectively for implementing the corresponding procedures in the method 200, and can achieve the same or equivalent technical effects, details of which are omitted here for brevity.

The terminal in this embodiment of this application may be an electronic device, for example, an electronic device having an operating system, or a component in an electronic device, such as an integrated circuit or a chip. The electronic device may be a terminal, or may be another device other than a terminal. Exemplarily, the terminal may include, but is not limited to, the types of the terminal 11 listed above, and the another device may be a server, a network attached storage (Network Attached Storage, NAS), or the like. The embodiments of this application do not impose a specific limitation on this.

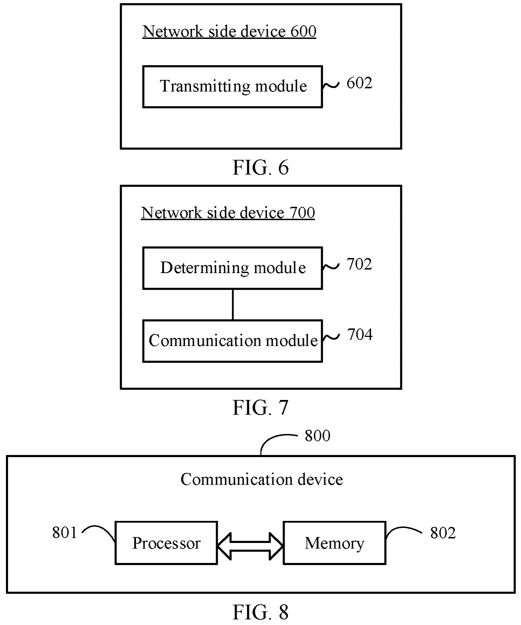

FIG. 6 is a schematic structural diagram of a network side device according to an embodiment of this application. As shown in FIG. 6, the network side device 600 includes the following module:
a transmitting module 602, configured to transmit first information, the first information being used for indicating whether a secondary key needs to be updated in a case of performing a CPC, where the first information includes at least one of the following: 1) a first serial number and/or a second serial number; 2) indication information, the indication information being used for indicating whether to update the secondary key; and 3) a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving a terminal belongs, and the second serial number is a serial number of an SN to which a PSCell that the terminal is about to access belongs.

Optionally, the network side device 600 further includes a receiving module, a processing module, and the like.

The network side device provided by this embodiment of this application transmits the first information, the first information being used for indicating whether the secondary key needs to be updated in a case of performing the CPC. In this way, in a case of performing the CPC, the terminal may determine, based on the first information, whether to update the secondary key, so that understandings of whether to update the secondary key of the terminal and the network side device are consistent. This helps the terminal and the network side device to perform a secure communication process by using a correct secondary key, thereby improving communication performance.

Optionally, in an embodiment, the transmitting module 602 is further configured to transmit the CPC configuration, the CPC configuration including sthe indication information, or the CPC configuration being associated with the indication information, where the indication information is used for indicating at least one of the following: 1) in a case that the PSCell currently serving the terminal applies the CPC configuration and the CPC is performed, whether the secondary key needs to be updated; 2) whether the SN to which the PSCell in the CPC configuration belongs is the same as the SN to which the PSCell currently serving the terminal belongs; and 3) whether a PDCP anchor point of the PSCell in the CPC configuration changes relative to the current serving PSCell.

Optionally, in an embodiment, the configuration identification list includes one of the following: 1) a first list, an SN to which a PSCell corresponding to an identification of a CPC configuration included in the first list belongs being the same as the SN to which the current serving PSCell belongs; 2) a second list, an SN to which a PSCell corresponding to an identification of a CPC configuration included in the second list belongs being different from the SN to which the current serving PSCell belongs; and 3) a third list and a fourth list, an SN to which a PSCell corresponding to an identification of a CPC configuration included in the third list belongs being the same as the SN to which the current serving PSCell belongs, and an SN to which a PSCell corresponding to an identification of a CPC configuration included in the fourth list belongs being different from the SN to which the current serving PSCell belongs.

The network side device 600 according to this embodiment of this application may be found in the procedures of the method 300 of the embodiments of this application. Moreover, the units/modules in the network side device 600 and the foregoing other operations and/or functions are respectively for implementing the corresponding procedures in the method 300, and can achieve the same or equivalent technical effects. Details are omitted here for brevity.

FIG. 7 is a schematic structural diagram of a network side device according to an embodiment of this application. The network side device corresponds to a target SN in another embodiment. As shown in FIG. 7, the network side device 700 includes the following module:
a determining module 702, configured to determine whether a terminal updates a secondary key, where the network side device includes an SN to which a PSCell that the terminal is about to access during perform a CPC belongs; and
a communication module 704, configured to: if it is determined that the secondary key has been updated, communicate with the terminal by using an updated secondary key or a first key corresponding to the updated secondary key.

In the network side device provided in this embodiment of this application, if the network side device determines that the secondary key (on the terminal side) has been updated, the network side device communicates with the terminal by using the updated secondary key or the first key corresponding to the secondary key updated by the terminal, so that understandings of whether to update the secondary key of the terminal and the network side device are consistent. This helps the terminal and the network side device to perform a secure communication process by using a correct secondary key, thereby improving communication performance.

Optionally, in an embodiment, the determining module 702 is configured to determine, based on third information, whether the terminal updates the secondary key, where the third information is carried by at least one of the following: an SN reconfiguration complete message and an SN status transfer message.

The network side device 700 according to this embodiment of this application may be found in the procedures of the method 400 of the embodiments of this application. Moreover, the units/modules in the network side device 700 and the foregoing other operations and/or functions are respectively for implementing the corresponding procedures in the method 400, and can achieve the same or equivalent technical effects. Details are omitted here for brevity.

Optionally, as shown in FIG. 8, an embodiment of this application further provides a communication device 800, including a processor 801 and a memory 802. The memory 802 has a program or an instruction executable on the processor 801 stored therein. For example, when the communication device 800 is a terminal, the program or instruction is executed by the processor 801, the steps of the above secondary key updating method embodiments are implemented, and the same technical effects are achieved. When the communication device 800 is a network side device, the program or instruction is executed by the processor 801, the steps of the above secondary key updating method embodiments are implemented, and the same technical effects are achieved, details of which are omitted here for brevity.

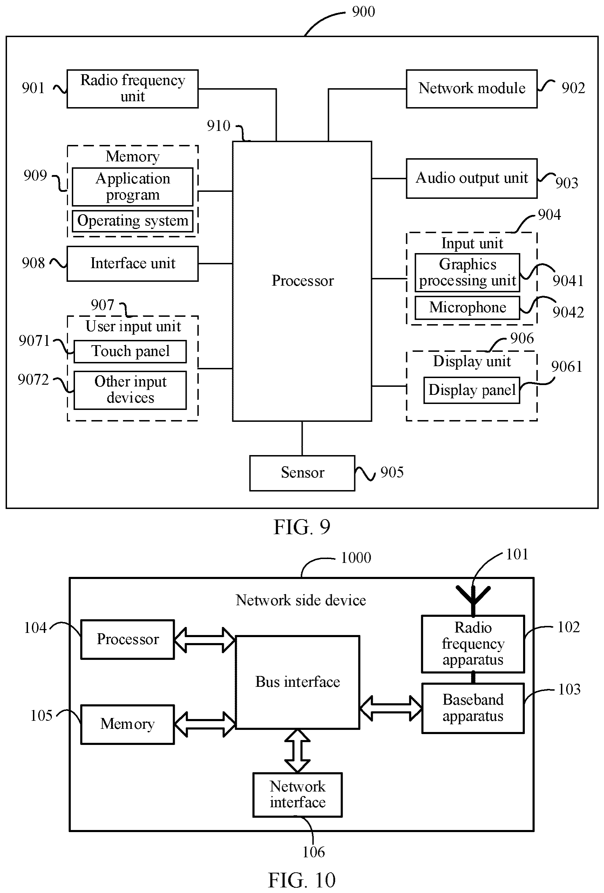

An embodiment of this application further provides a terminal, including: a processor and a communication interface. The processor is configured to determine, based on first information in a case of performing a CPC, whether to update a secondary key, where the first information includes at least one of the following: a first serial number and/or a second serial number; indication information from a network side device, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs. The terminal embodiment corresponds to the above terminal side method embodiment. The implementation processes and implementations of the above method embodiment can be applied to the terminal embodiment and can achieve the same technical effects. Specifically, FIG. 9 is a schematic structural diagram of hardware of a terminal for implementing an embodiment of this application.

The terminal 900 includes, but is not limited to, at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (such as a battery) for supplying power to the components. The power supply may be logically connected to the processor 910 by a power management system, thereby implementing functions such as charging, discharging, and power consumption management by using the power management system. The structures of the terminal shown in FIG. 9 constitute no limitation on the terminal, and the terminal may include more or fewer components than those shown in the figure, or some components may be combined, or a different component deployment may be used, details of which are omitted here.

It should be understood that in this embodiment of this application, the input unit 904 may include a graphics processing unit (Graphics Processing Unit, GPU) 9041 and a microphone 9042, and the GPU 9041 processes image data of static pictures or videos obtained by an image capturing apparatus (such as a camera) in a video capturing mode or an image capturing mode. The display unit 906 may include a display panel 9061, and the display panel 9061 may be configured by using a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional key (such as a volume control key or a switch key), a track ball, a mouse, and a joystick. Details are not described herein again.

In this embodiment of this application, after receiving downlink data from a network side device, the radio frequency unit 901 may transmit the data to the processor 910 for processing. In addition, the radio frequency unit 901 may transmit uplink data to the network side device. Generally, the radio frequency unit 901 includes, but is not limited to, an antenna, an amplifier, a transceiver, a coupler, a low noise amplifier, a duplexer, and the like.

The memory 909 may be configured to store a software program or instruction and various data. The memory 909 may mainly include a first storage area for storing a program or instructions, and a second storage area for storing data. The first storage area may store an operating system, an application program or instructions required by at least one function (for example, a sound playing function and an image display function), and the like. In addition, the memory 909 may include a volatile memory or a non-volatile memory, or may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 909 in this embodiment of this application includes but is not limited to these memories and any other memory of a suitable type.

The processor 910 may include one or more processing units. Optionally, the processor 910 integrates an application processor and a modem processor. The application processor mainly processes operations involving an operating system, a user interface, an application, and the like. The modem processor mainly processes a wireless communication signal, and is, for example, a baseband processor. It can be understood that the above modem may not be integrated into the processor 910.

The processor 910 may be configured to determine, based on first information in a case of performing a CPC, whether to update a secondary key, where the first information includes at least one of the following: a first serial number and/or a second serial number; indication information from a network side device, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving the terminal belongs, and the second serial number is a serial number of an SN to which a PSCell that the terminal is about to access belongs.

In the embodiments of this application, in a case of performing the CPC, the terminal may determine, based on the first information, whether to update the secondary key, so that understandings of whether to update the secondary key of the terminal and the network side device are consistent. This helps the terminal and the network side device to perform a secure communication process by using a correct secondary key, thereby improving communication performance.

The terminal 900 provided by this embodiment of this application can further implement the processes in the above secondary key updating method embodiments, and can achieve the same technical effects, details of which are omitted here for brevity.

An embodiment of this application further provides a network side device, including a processor and a communication interface. The communication interface is configured to transmit first information, the first information being used for indicating whether a secondary key needs to be updated in a case of performing a CPC, where the first information includes at least one of the following: a first serial number and/or a second serial number; indication information, the indication information being used for indicating whether to update the secondary key; and a configuration identification list, the configuration identification list including an identification of a CPC configuration, and an SN to which a PSCell corresponding to the CPC configuration belongs is the same as or different from an SN to which a current serving PSCell belongs, where the first serial number is a serial number of an SN to which a PSCell currently serving a terminal belongs, and the second serial number is a serial number of an SN to which a PSCell that the terminal is about to access belongs; or, the processor is configured to determine whether a terminal updates a secondary key. The network side device includes an SN to which a PSCell that the terminal is about to access during perform a CPC belongs; and the communication module is configured to: if it is determined that the secondary key has been updated, communicate with the terminal by using an updated secondary key or a first key corresponding to the updated secondary key. The network side device embodiment corresponds to the above network side device method embodiment, and the implementation processes and implementations of the above method embodiment can be applied to the network side device embodiment, and can achieve the same technical effect.

Specifically, an embodiment of this application further provides a network side device. As shown in FIG. 10, the network side device 1000 includes: an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101 and transmits the received information to the baseband apparatus 103 for processing. In a downlink direction, the baseband apparatus 103 processes information to be transmitted and transmits the information to the radio frequency apparatus 102, and the radio frequency apparatus 102 processes the received information and transmits the information via the antenna 101.

The method performed by the network side device in the above embodiment may be implemented in the baseband apparatus 103, and the baseband apparatus 103 includes a baseband processor.

sThe baseband apparatus 103 may include, for example, at least one baseband board. A plurality of chips are arranged on the baseband board. As shown in FIG. 10, one of the chips is, for example, the baseband processor connected to the memory 105 through a bus interface to call a program in the memory 105 to perform the operations of the network side device shown in the above method embodiment.

The network side device may further include a network interface 106. The interface is, for example, a common public radio interface (common public radio interface, CPRI).

Specifically, the network side device 1000 provided by this embodiment of this application further includes: an instruction or a program stored on the memory 105 and executable on the processor 104. The processor 104 calls the instruction or the program in the memory 105 to perform the method performed by the modules shown in FIG. 6 or FIG. 7 and achieves the same technical effects, details of which are omitted here for brevity.

An embodiment of this application further provides a readable storage medium. The readable storage medium has a program or an instruction stored therein. The program or instruction, when executed by a processor, implements the processes of the above secondary key updating method embodiment and can achieve the same technical effects, details of which are omitted here for brevity.

The processor is the processor in the terminal described in the above embodiments. The readable storage medium may be non-volatile or non-transient. The readable storage medium includes a computer-readable storage medium, such as a computer read-only memory (ROM), a random access memory (RAM), a magnetic tape, as compact disc, or the like.

An embodiment of this application further provides a chip. The chip includes a processor and a communication interface. The communication interface is coupled to the processor. The processor is configured to execute a program or an instruction to implement the processes of the above secondary key updating method embodiment, and can achieve the same technical effects, details of which are omitted here for brevity.

It should be understood that the chip mentioned in the embodiments of this application can alternatively be referred to as a system chip, a chip system, or a system-on-chip.

An embodiment of this application further provides a computer program/program product. The computer program/program product is stored in a storage medium. The computer program/program product, when executed by at least one processor, implements the processes of the above secondary key updating method embodiment and can achieve the same technical effects, details of which are omitted here for brevity.

An embodiment of this application further provides a secondary key updating system, including a terminal, a first network side device, and/or a second network side device. The terminal may be configured to perform the steps of the secondary key updating method described above. The first network side device may be configured to perform the steps corresponding to the network side device in the secondary key updating method described above. The second network side device may be configured to perform the steps corresponding to the target SN in the secondary key updating method described above.

It should be noted that the terms "include", "comprise", or any other variations thereof herein are intended to cover a non-exclusive inclusion, so that a processor, method, object, or apparatus including a series of elements not only includes those elements, but also includes other elements not specifically listed, or includes inherent elements of this process, method, object, or apparatus. Without more restrictions, elements defined by the sentence "including one" does not exclude that there are still other same elements in the process, method, object, or apparatus including these elements. In addition, it should be noted that the scopes of the methods and apparatus in the implementations of this application are not limited to executing functions in the order shown or discussed, but may alternatively include executing functions in a substantially simultaneous manner or in an opposite order according to the functions involved. For example, the methods described may be executed in a different order than that described, and steps may alternatively be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially or parts contributing to the related art may be implemented in a form of a computer software product. The computer software product is stored in a storage medium (such as a ROM/RAM, a magnetic disk, or a CD) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific implementations described above, and the specific implementations described above are merely examples and not limitative. Those of ordinary skill in the art may make many forms under the teaching of this application without departing from the spirit of this application and the protection scope of the claims, and these forms shall all fall within the protection of this application.

## Claims

1. A secondary key updating method, comprising:
determining, by a terminal based on first information in a case of performing a conditional primary secondary cell change (CPC), whether to update a secondary key, wherein the first information comprises at least one of the following:
a first serial number and/or a second serial number;
indication information from a network side device, the indication information being used for indicating whether to update the secondary key;
a configuration identification list, the configuration identification list comprising an identification of a CPC configuration, and a secondary node (SN) to which a primary secondary cell (PSCell) corresponding to the CPC configuration belongs is the same as or different from an SN to which a current serving PSCell belongs,
wherein the first serial number is a serial number of an SN to which a PSCell currently serving the terminal belongs, and the second serial number is a serial number of an SN to which a PSCell that the terminal is about to access belongs.

2. The method according to claim 1, wherein the first information comprises the first serial number and the second serial number, and the determining, by a terminal based on first information in a case of performing a CPC, whether to update a secondary key comprises:
determining, by the terminal based on the first serial number and the second serial number in the case of performing the CPC, whether the CPC is intra-SN handover or inter-SN handover;
determining, by the terminal in a case that the CPC is the intra-SN handover, not to update the secondary key; and determining, by the terminal in a case that the CPC is the inter-SN handover, to update the secondary key.

3. The method according to claim 2, wherein before the determining, by a terminal based on first information in a case of performing a CPC, whether to update a secondary key, the method further comprises:
receiving, by the terminal, the CPC configuration, wherein a secondary cell group (SCG) configuration in the CPC configuration comprises a serial number of an SN.

4. The method according to claim 2, wherein before the determining, by a terminal based on first information in a case of performing a CPC, whether to update a secondary key, the method further comprises:
obtaining, by the terminal, the first serial number based on a serving cell configuration; or,
obtaining, by the terminal, the first serial number based on a configuration other than a serving cell configuration.

5. The method according to claim 1, wherein the first information comprises the first serial number or the second serial number, and the determining, by a terminal based on first information in a case of performing a CPC, whether to update a secondary key comprises:
in the case of performing the CPC, if the terminal only obtains the first serial number or the second serial number, determining, by the terminal, that the CPC is inter-SN handover, and determining, by the terminal, to update the secondary key.

6. The method according to claim 1, wherein the method further comprises: receiving, by the terminal, the CPC configuration, the CPC configuration comprising the indication information, or the CPC configuration being associated with the indication information, wherein the indication information is used for indicating at least one of the following:
in a case that the current serving PSCell applies the CPC configuration and the CPC is performed, whether the terminal needs to update the secondary key;
whether an SN to which a PSCell in the CPC configuration belongs is the same as the SN to which the current serving PSCell belongs; and
whether a packet data convergence protocol (PDCP) anchor point of the PSCell in the CPC configuration changes relative to the current serving PSCell.

7. The method according to claim 6, wherein the method further comprises: receiving, by the terminal, second information, the second information being used for updating the indication information.

8. The method according to claim 1, wherein the first information comprises the configuration identification list, and the determining, by a terminal based on first information in a case of performing a CPC, whether to update a secondary key comprises:
in the case of performing the CPC, determining, by the terminal based on the configuration identification list, whether an SN to which a PSCell that is about to be accessed belongs is the same as the SN to which the current serving PSCell belongs;
in a case that the SN to which the PSCell that is about to be accessed belongs is the same as the SN to which the current serving PSCell belongs, determining, by the terminal, not to update the secondary key; and
in a case that the SN to which the PSCell that is about to be accessed belongs is different from the SN to which the current serving PSCell belongs, determining, by the terminal, to update the secondary key.

9. The method according to claim 8, wherein the configuration identification list comprises any one of the following:
a first list, an SN to which a PSCell corresponding to an identification of a CPC configuration comprised in the first list belongs being the same as the SN to which the current serving PSCell belongs;
a second list, an SN to which a PSCell corresponding to an identification of a CPC configuration comprised in the second list belongs being different from the SN to which the current serving PSCell belongs; and
a third list and a fourth list, an SN to which a PSCell corresponding to an identification of a CPC configuration comprised in the third list belongs being the same as the SN to which the current serving PSCell belongs, and an SN to which a PSCell corresponding to an identification of a CPC configuration comprised in the fourth list belongs being different from the SN to which the current serving PSCell belongs.

10. The method according to any one of claims 1 to 9, wherein the method further comprises at least one of the following:
ignoring, by the terminal, a first parameter in the CPC configuration in a case that the terminal determines, based on the first information, not to update the secondary key, the first parameter being used for updating the secondary key; and
deriving or updating, by the terminal, the secondary key by using the first parameter in the CPC configuration in a case that the terminal determines, based on the first information, to update the secondary key.

11. A secondary key updating method, comprising:
transmitting, by a network side device, first information, the first information being used for indicating whether a secondary key needs to be updated in a case of performing a conditional primary secondary cell change (CPC), wherein the first information comprises at least one of the following:
a first serial number and/or a second serial number;
indication information, the indication information being used for indicating whether to update the secondary key; and
a configuration identification list, the configuration identification list comprising an identification of a CPC configuration, and an secondary node (SN) to which a primary secondary cell (PSCell) corresponding to the CPC configuration belongs is the same as or different from an SN to which a current serving PSCell belongs,
wherein the first serial number is a serial number of an SN to which a PSCell currently serving a terminal belongs, and the second serial number is a serial number of an SN to which a PSCell that the terminal is about to access belongs.

12. The method according to claim 11, wherein the method further comprises:
transmitting, by the network side device, the CPC configuration, the CPC configuration comprising the indication information, or the CPC configuration being associated with the indication information, wherein the indication information is used for indicating at least one of the following:
in a case that the PSCell currently serving the terminal applies the CPC configuration and the CPC is performed, whether the secondary key needs to be updated;
whether an SN to which a PSCell in the CPC configuration belongs is the same as the SN to which the PSCell currently serving the terminal belongs; and
whether a packet data convergence protocol (PDCP) anchor point of the PSCell in the CPC configuration changes relative to the current serving PSCell.

13. The method according to claim 11, wherein the configuration identification list comprises any one of the following:
a first list, an SN to which a PSCell corresponding to an identification of a CPC configuration comprised in the first list belongs being the same as the SN to which the current serving PSCell belongs;
a second list, an SN to which a PSCell corresponding to an identification of a CPC configuration comprised in the second list belongs being different from the SN to which the current serving PSCell belongs; and
a third list and a fourth list, an SN to which a PSCell corresponding to an identification of a CPC configuration comprised in the third list belongs being the same as the SN to which the current serving PSCell belongs, and an SN to which a PSCell corresponding to an identification of a CPC configuration comprised in the fourth list belongs being different from the SN to which the current serving PSCell belongs.

14. A secondary key updating method, comprising:
determining, by a target secondary node (SN), whether a terminal updates a secondary key, wherein the target SN comprises an SN to which a primary secondary cell (PSCell) that the terminal is about to access during performing a conditional primary secondary cell change (CPC) belongs; and
if the target SN determines that the secondary key has been updated, communicating, by the target SN, with the terminal by using the updated secondary key or a first key corresponding to the updated secondary key.

15. The method according to claim 14, wherein the determining, by a target SN, whether a terminal updates a secondary key comprises:
determining, by the target SN based on third information, whether the terminal updates the secondary key, wherein the third information is carried by at least one of the following: an SN reconfiguration complete message and an SN status transfer message.

16. A terminal, comprising:
a processing module, configured to determine, based on first information in a case of performing a conditional primary secondary cell change (CPC), whether to update a secondary key, wherein the first information comprises at least one of the following:
a first serial number and/or a second serial number;
indication information from a network side device, the indication information being used for indicating whether to update the secondary key;
a configuration identification list, the configuration identification list comprising an identification of a CPC configuration, and an secondary node (SN) to which a primary secondary cell (PSCell) corresponding to the CPC configuration belongs is the same as or different from an SN to which a current serving PSCell belongs,
wherein the first serial number is a serial number of an SN to which a PSCell currently serving the terminal belongs, and the second serial number is a serial number of an SN to which a PSCell that the terminal is about to access belongs.

17. The terminal according to claim 16, wherein the first information comprises the first serial number and the second serial number, and the processing module is configured to:
determine, based on the first serial number and the second serial number in a case of performing the CPC, whether the CPC is intra-SN handover or inter-SN handover;
determine, in a case that it is determined that the CPC is the intra-SN handover, not to update the secondary key; and determine, in a case that it is determined that the CPC is the inter-SN handover, to update the secondary key.

18. The terminal according to claim 17, wherein the terminal further comprises a receiving module, configured to receive the CPC configuration, wherein an secondary cell group (SCG) configuration in the CPC configuration comprises a serial number of an SN.

19. The terminal according to claim 17, wherein the terminal further comprises a receiving module, configured to:
obtain the first serial number based on a serving cell configuration; or,
obtain the first serial number based on a configuration other than a serving cell configuration.

20. The terminal according to claim 16, wherein the first information comprises the first serial number or the second serial number, and the processing module is configured to: in a case of performing the CPC, if only the first serial number or the second serial number is obtained, determine that the CPC is inter-SN handover and determine to update the secondary key.

21. The terminal according to claim 16, wherein the terminal further comprises: a receiving module, configured to receive the CPC configuration, the CPC configuration comprising the indication information, or the CPC configuration being associated with the indication information, wherein the indication information is used for indicating at least one of the following:
in a case that the current serving PSCell applies the CPC configuration and the CPC is performed, whether the terminal needs to update the secondary key;
whether an SN to which an PSCell in the CPC configuration belongs is the same as the SN to which the current serving PSCell belongs; and
whether a packet data convergence protocol (PDCP) anchor point of the PSCell in the CPC configuration changes relative to the current serving PSCell.

22. The terminal according to claim 21, wherein the terminal further comprises a receiving module, configured to receive second information, the second information being used for updating the indication information.

23. The terminal according to claim 16, wherein the first information comprises the configuration identification list, and the processing module is configured to:
in a case of performing the CPC, determine, based on the configuration identification list, whether an SN to which a PSCell that is about to be accessed belongs is the same as the SN to which the current serving PSCell belongs;
in a case that the SN to which the PSCell that is about to be accessed belongs is the same as the SN to which the current serving PSCell belongs, determine not to update the secondary key; and
in a case that the SN to which the PSCell that is about to be accessed belongs is different from the SN to which the current serving PSCell belongs, determine to update the secondary key.

24. The terminal according to claim 23, wherein the configuration identification list comprises any one of the following:
a first list, an SN to which a PSCell corresponding to an identification of a CPC configuration comprised in the first list belongs being the same as the SN to which the current serving PSCell belongs;
a second list, an SN to which a PSCell corresponding to an identification of a CPC configuration comprised in the second list belongs being different from the SN to which the current serving PSCell belongs; and
a third list and a fourth list, an SN to which a PSCell corresponding to an identification of a CPC configuration comprised in the third list belongs being the same as the SN to which the current serving PSCell belongs, and an SN to which a PSCell corresponding to an identification of a CPC configuration comprised in the fourth list belongs being different from the SN to which the current serving PSCell belongs.

25. The terminal according to any one of claims 16 to 24, wherein the processing module is further configured to perform at least one of the following:
ignoring a first parameter in the CPC configuration in a case that it is determined, based on the first information, not to update the secondary key, the first parameter being used for updating the secondary key; and
deriving or updating the secondary key by using the first parameter in the CPC configuration in a case that it is determined, based on the first information, to update the secondary key.

26. A network side device, comprising:
a transmitting module, configured to transmit first information, the first information being used for indicating whether a secondary key needs to be updated in a case of performing a conditional primary secondary cell change (CPC), wherein the first information comprises at least one of the following:
a first serial number and/or a second serial number;
indication information, the indication information being used for indicating whether to update the secondary key; and
a configuration identification list, the configuration identification list comprising an identification of a CPC configuration, and an secondary node (SN) to which a primary secondary cell (PSCell) corresponding to the CPC configuration belongs is the same as or different from an SN to which a current serving PSCell belongs,
wherein the first serial number is a serial number of an SN to which a PSCell currently serving a terminal belongs, and the second serial number is a serial number of an SN to which a PSCell that the terminal is about to access belongs.

27. The network side device according to claim 26, wherein the transmitting module is further configured to transmit the CPC configuration, the CPC configuration comprising the indication information, or the CPC configuration being associated with the indication information, wherein the indication information is used for indicating at least one of the following:
in a case that the PSCell currently serving the terminal applies the CPC configuration and the CPC is performed, whether the secondary key needs to be updated;
whether an SN to which a PSCell in the CPC configuration belongs is the same as the SN to which the PSCell currently serving the terminal belongs; and
whether a packet data convergence protocol (PDCP) anchor point of the PSCell in the CPC configuration changes relative to the current serving PSCell.

28. The network side device according to claim 26, wherein the configuration identification list comprises any one of the following:
a first list, an SN to which a PSCell corresponding to an identification of a CPC configuration comprised in the first list belongs being the same as the SN to which the current serving PSCell belongs;
a second list, an SN to which a PSCell corresponding to an identification of a CPC configuration comprised in the second list belongs being different from the SN to which the current serving PSCell belongs; and
a third list and a fourth list, an SN to which a PSCell corresponding to an identification of a CPC configuration comprised in the third list belongs being the same as the SN to which the current serving PSCell belongs, and an SN to which a PSCell corresponding to an identification of a CPC configuration comprised in the fourth list belongs being different from the SN to which the current serving PSCell belongs.

29. A network side device, comprising:
a determining module, configured to determine whether a terminal updates a secondary key, wherein the network side device comprises an SN to which a PSCell that the terminal is about to access during performing a CPC belongs; and
a communication module, configured to: if it is determined that the secondary key has been updated, communicate with the terminal by using the updated secondary key or a first key corresponding to the updated secondary key.

30. The network side device according to claim 29, wherein the determining module is configured to determine, based on third information, whether the terminal updates the secondary key, wherein the third information is carried by at least one of the following: an SN reconfiguration complete message and an SN status transfer message.

31. A terminal, comprising a processor and a memory, the memory having a program or an instruction executable on the processor stored therein, and when the program or the instruction is executed by the processor, the steps of the method according to any one of claims 1 to 10 are implemented.

32. A network side device, comprising a processor and a memory, the memory having a program or an instruction executable on the processor stored therein, and when the program or the instruction is executed by the processor, the steps of the method according to any one of claims 11 to 15 are implemented.

33. A readable storage medium, having a program or an instruction stored therein, when the program or the instruction is executed by a processor, the steps of the method according to any one of claims 1 to 15 are implemented.
